# EUROPEAN PATENT APPLICATION

(11) **EP 4 257 902 A1**
(43) Date of publication of application: **11.10.2023**
(21) Application number: 21917175.8
(22) Date of filing: 15.11.2021
(51) Int. Cl.: F25D 23/12, C02F 9/02

(54) **WATER PATH INTEGRATED DEVICE AND REFRIGERATOR WITH SAME**

(30) Priority: 06.01.2021 CN 202110012934
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: YANG, Jun, Qingdao, Shandong 266101 (CN); MOU, Guoliang, Qingdao, Shandong 266101 (CN); ZHANG, Fangyou, Qingdao, Shandong 266101 (CN)
(74) Representative: Gille Hrabal Partnerschaftsgesellschaft mbB Patentanwälte
(86) International application number: PCT/CN2021/130697
(87) International publication number: WO 2022/148134

(57) **Abstract**

The present invention discloses a water-circuit integrated device, including a filter and a filter housing with an opening, wherein the filter includes a connector and a filter cartridge rotatably connected to the connector, the filter cartridge is inserted into the filter housing through the opening, and the connector is provided at an end in the filter housing apart from the opening; the filter cartridge includes a first end close to the connector and a second end provided opposite to the first end, a clamping part is provided on a circumference of the first end, and a buckling part fitted with the clamping part is provided on the connector; when the filter cartridge is located at a butted position of the filter cartridge and the connector, the clamping part and the buckling part are provided front and back in an axial direction and adjacent in a circumferential direction; when the filter cartridge is located at a mounting finished position, the clamping part and the buckling part are provided front and back in the axial direction and staggered in the circumferential direction. In the water-circuit integrated device according to the present invention, the filter cartridge is easy to mount and dismount, thus facilitating an operation of a user.

## Description

### TECHNICAL FIELD

The present invention relates to the field of filters, and in particular, to a water-circuit integrated device and a refrigerator having the same.

### BACKGROUND

Currently, in order to facilitate use of cold water and ice cubes by users, a plurality of refrigerator products are provided therein with water-circuit integrated devices, the water-circuit integrated device generally includes a filter, a water valve, a water bottle and other devices which are connected in sequence, and a housing is usually provided to integrate the filter, the water valve and the water bottle together. The filter is configured to filter and purify external water, the water bottle is configured to store filtered water to allow the filtered water to be cooled in a refrigerator, and the water valve is configured to control flow of the water or distribution of the water; for example, the water is divided into two paths and then supplied to a dispenser and an ice maker. The filter generally includes a filter cartridge and a connector, the connector is provided with a water inlet and a water outlet and generally fixedly provided in a water circuit module, and the filter cartridge is required to be detachably connected to the connector due to periodic replacement.

However, in a prior art, the detachment between the filter cartridge and the connector is complicated, which brings inconvenience to the user.

### SUMMARY

An object of the present invention is to provide a water-circuit integrated device and a refrigerator having the same.

To achieve the above-mentioned object of the invention, an embodiment of the present invention provides a water-circuit integrated device, comprising a filter and a filter housing with an opening, wherein the filter comprises a connector and a filter cartridge rotatably connected to the connector, the filter cartridge is inserted into the filter housing through the opening, and the connector is provided at an end in the filter housing apart from the opening; the filter cartridge comprises a first end close to the connector and a second end provided opposite to the first end, a clamping part is provided on a circumference of the first end, and a buckling part fitted with the clamping part is provided on the connector; when the filter cartridge is located at a butted position of the filter cartridge and the connector, the clamping part and the buckling part are provided front and back in an axial direction and adjacent in a circumferential direction; when the filter cartridge is located at a mounting finished position, the clamping part and the buckling part are provided front and back in the axial direction and staggered in the circumferential direction.

As a further improvement to the present invention, wherein the filter housing comprises a first circular arc section and a second circular arc section which enclose a cylinder; the first circular arc section can be matched with the insertion of the filter cartridge into the filter housing, and the second circular arc section can interfere with the insertion of the filter cartridge into the filter housing.

As a further improvement to the present invention, wherein the first circular arc section has an arc length equal to a circumferential dimension of the clamping part.

As a further improvement to the present invention, wherein a support portion is provided on the second circular arc section, the support portion protrudes towards an interior of the filter housing, and when the filter cartridge is inserted into the filter housing, the support portion abuts against the filter cartridge.

As a further improvement to the present invention, further comprising a water valve and a water bottle sequentially communicated with the filter, and a water valve housing and a fixing portion connected with the filter housing, wherein the water valve housing accommodates the water valve, and the water bottle is connected to the fixing portion.

As a further improvement to the present invention, wherein the filter housing, the water valve housing, and the fixing portion are integrally formed.

As a further improvement to the present invention, wherein the water valve is selectively communicated with the water bottle through a water-bottle water inlet assembly; the water-bottle water inlet assembly comprises a water inlet sleeve and a water inlet insertion part rotatably inserted into the water inlet sleeve, and water inlet flow channels which can be mutually communicated are provided in the water inlet insertion part and the water inlet sleeve.

As a further improvement to the present invention, wherein the water inlet sleeve extends outwards from a water inlet of the water bottle, and the water inlet sleeve and the water bottle are integrally formed; the water inlet insertion part extends outwards from a water outlet of the water valve, and the water inlet insertion part and the water valve are integrally formed.

In another aspect, the present invention discloses a refrigerator including a refrigerating chamber, wherein the water-circuit integrated device according to any one of the above descriptions is mounted in the refrigerating chamber.

As a further improvement to the present invention, comprising a dispenser and an ice maker, the ice maker being connected with an ice maker water supply pipe, and the dispenser being connected with a dispenser water supply pipe,
wherein the water-circuit integrated device further comprises a water valve and a water bottle, the connector is provided with a filter water inlet and a filter water outlet, the water bottle comprises a water bottle water inlet and a water bottle water outlet, and the water valve comprises a water valve water inlet, a first water outlet and a second water outlet;
the filter water inlet is connected with a water inlet pipe for supplying water, the filter water outlet is connected with the water valve water inlet, and the water valve selectively supplies water to the first water outlet or the second water outlet;
the first water outlet is connected with the ice maker water supply pipe, the second water outlet is connected with the water bottle water inlet, and the water bottle water outlet is connected with the dispenser water supply pipe.

Compared with a prior art, in the water-circuit integrated device according to the present invention, the clamping part is provided on the filter cartridge, the buckling part is provided on the connector, and when the filter cartridge is inserted into the filter housing and in butt connection with the connector, the clamping part and the buckling part are provided front and back in the axial direction and adjacent in the circumferential direction. At this point, the clamping part and the buckling part can be staggered in the circumferential direction only by rotating the filter cartridge, such that the clamping part is in snapped connection with the buckling part, the filter cartridge may be located at the mounting finished position, and therefore, a mounting mode of the filter cartridge is easy; the filter cartridge can be detached only by reverse rotation, thus facilitating an operation of a user.

### BRIEF DESCRIPTION OF THE DRAWINGS

FIG. 1 is a schematic structural diagram of a water-circuit integrated device according to an embodiment of the present invention;
FIG. 2 is a schematic structural diagram of a water-circuit integrated device according to an embodiment of the present invention;
FIG. 3 is a schematic structural diagram of a water-circuit integrated device according to an embodiment of the present invention;
FIG. 4 is a schematic enlarged diagram of part A of FIG. 3;
FIG. 5 is a schematic sectional diagram of a water-bottle water inlet assembly in an embodiment of the present invention;
FIG. 6 is a schematic structural diagram of a water-circuit integrated device according to an embodiment of the present invention;
FIG. 7 is a schematic structural diagram when a filter cartridge is located at a butted position of the filter cartridge and a connector in an embodiment of the present invention;
FIG. 8 is a schematic sectional diagram when a filter cartridge is located at a mounting finished position in an embodiment of the present invention; and
FIG. 9 is a schematic structural diagram of a water-circuit integrated device according to an embodiment of the present invention.

### DETAILED DESCRIPTION

Hereinafter, the present invention will be described in detail in conjunction with specific embodiments shown in the accompanying drawings. However, these embodiments have no limitations on the present invention, and any transformations of structure, method, or function made by persons skilled in the art according to these embodiments fall within the protection scope of the present invention.

It should be understood that the terms expressive of spatial relative positions, such as "upper", "above", "lower", "below", or the like herein are used to describe the relationship of a unit or feature relative to another unit or feature in the drawings, for the purpose of illustration and description. Terms expressive of the spatial relative positions are intended to include different orientations of the device in use or operation other than the orientations shown in the drawings.

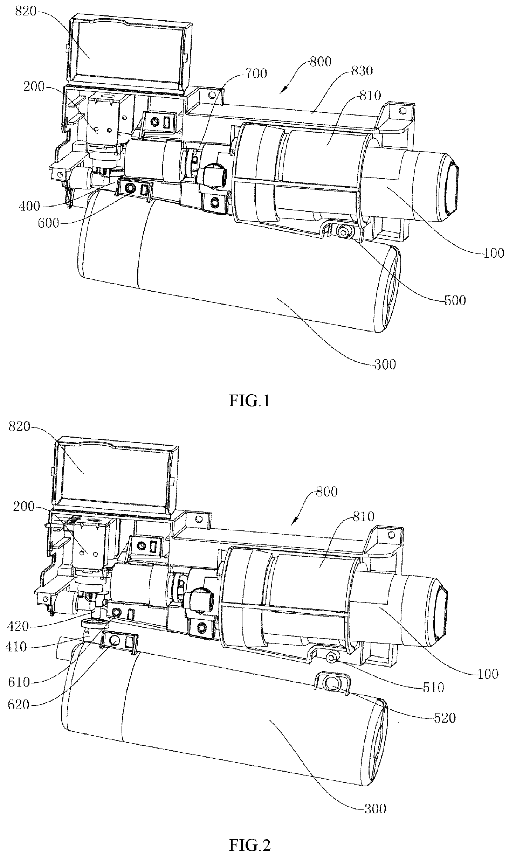

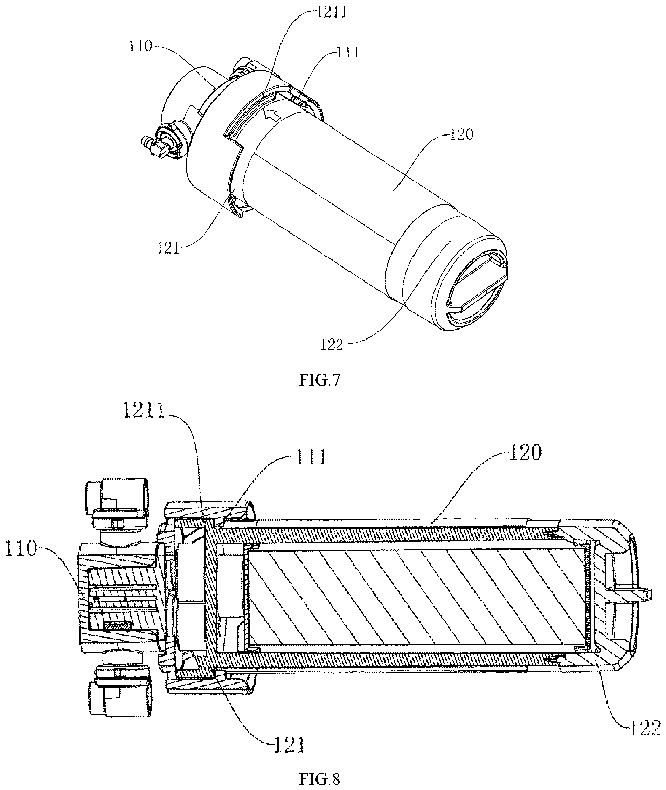

As shown in FIGS. 1 to 9, an embodiment of the present invention discloses a water-circuit integrated device. The water-circuit integrated device includes a filter 100, a water valve 200 and a water bottle 300 communicated in sequence, the water bottle 300 includes a proximal end 310 and a distal end 320 arranged oppositely in a length direction, the proximal end 310 of the water bottle 300 is detachably connected with the water valve 200 by a water-bottle water inlet assembly 400, and the distal end 310 of the water bottle 300 is detachably connected with the filter 100 by a distal-end snapping assembly 500. The water-bottle water inlet assembly 400 includes a rotation axis perpendicular to the length direction of the water bottle 300. During snapped connection of the distal-end snapping assembly 500, the water-bottle water inlet assembly 400 realizes locked connection in an axial direction of the rotation axis. When the water-bottle water inlet assembly 400 is released in the axial direction of the rotation axis, the distal-end snapping assembly 500 is released from the snapped connection.

In the water-circuit integrated device according to the present invention, one end of the water bottle 300 is detachably connected with the water valve 200 by the water-bottle water inlet assembly 400, and the other end of the water bottle is detachably connected with the filter 100 by the distal-end snapping assembly 500, such that during snapped connection of the distal-end snapping assembly 500, the water-bottle water inlet assembly 400 also realizes locked connection, and the water bottle 300, the water valve 200 and the filter 100 can be connected together. When the water-bottle water inlet assembly 400 is released, the distal-end snapping assembly 500 is just released from the snapped connection, such that the water bottle 300 can be smoothly detached from the water valve 200 and the filter 100. Therefore, the water bottle 300 can be conveniently connected with or detached from the water valve 200 and the filter 100 by fitting of the water-bottle water inlet assembly 400 and the distal-end snapping assembly 500, such that the water bottle 300 can be conveniently replaced or repaired subsequently.

Further, when the distal-end snapping assembly 500 is released from the snapped connection, the water-bottle water inlet assembly 400 is released in the axial direction of the rotation axis. That is, when the distal-end snapping assembly 500 is released from the snapped connection, the water-bottle water inlet assembly 400 is also released in the axial direction of the rotation axis, and at this point, the water bottle 300 can be detached from the water valve 200 and the filter 100. Thus, state transitions of the water-bottle water inlet assembly 400 and the distal-end snapping assembly 500 are completely consistent, such that a stroke of a rotation operation can be shortened, and an operation of mounting or dismounting the water bottle 300 is simpler and more convenient.

In the embodiment of the present invention, during snapped connection of the distal-end snapping assembly 500, a direction of the locked connection of the water-bottle water inlet assembly 400 is different from a direction of the snapped connection of the distal-end snapping assembly 500. That is, the water-bottle water inlet assembly 400 and the distal-end snapping assembly 500 are connected with the water bottle in different directions, thereby further reinforcing the connection of the water bottle 300 with the water valve 200 and the filter 100; the connection in the two different directions does not interfere, such that the water bottle 300 is not easily released and dropped even when the assembly in one direction fails.

Still further, during snapped connection of the distal-end snapping assembly 500, the direction of the locked connection of the water-bottle water inlet assembly 400 is the axial direction of the rotation axis, and the direction of the snapped connection of the distal-end snapping assembly 500 is perpendicular to the axial direction of the rotation axis. That is, directions of the connection of the water-bottle water inlet assembly 400 and the distal-end snapping assembly 500 to the water bottle are perpendicular to each other. Mutual interference of the connection in the two directions can be reduced to the minimum, such that the connection of the water bottle is firmer.

In the embodiment of the present invention, the distal-end snapping assembly 500 includes a distal-end snapping portion and a distal-end fitting portion which can be snapped to or separated from the distal-end snapping portion, the distal-end snapping portion is provided on one of the water bottle 300 and the filter 100, and the distal-end fitting portion is provided on the other of the water bottle 300 and the filter 100. The snapping or separating operation can be easily realized by mutual fitting of the distal-end snapping portion and the distal-end fitting portion. In the present embodiment, the distal-end snapping portion is provided on the filter 100, and the distal-end fitting portion is provided on the water bottle 300.

Further, as shown in FIG. 2, the distal-end snapping portion is configured as a distal-end hanging buckle 510 provided on the filter 100, the distal-end fitting portion is configured as a distal-end hanging hole 520 provided on the water bottle 300, and during the snapped connection of the distal-end snapping assembly 500, the distal-end hanging buckle 510 is inserted into the distal-end hanging hole 520. The connection by the hanging buckle and the hanging hole has a simple structure and a low cost, and is easy to operate. Specifically, the snapped connection of the distal-end snapping assembly 500 may be realized directly by inserting the distal-end hanging buckle 510 into the distal-end hanging hole 520. When the connection of the distal-end snapping assembly 500 is desired to be reinforced, a thread may be provided in the distal-end hanging buckle 510, and when the distal-end hanging buckle 510 is inserted into the distal-end hanging hole 520, a screw is screwed into and in threaded connection with the distal-end hanging buckle 510, and an end surface of the screw abuts against an edge of the hanging hole 520. In other embodiments, the distal-end hanging buckle may also be in interference fit with the distal-end hanging hole. Therefore, in a transportation/assembly process of the water-circuit integrated device or a refrigerator, even when conditions of collision or shaking, or the like, are generated, the distal end of the water bottle cannot be easily disconnected. Also, the distal-end hanging buckle 510 may extend outwards from a housing of the filter 100, the distal-end hanging buckle 510 and the housing of the filter 100 may be integrally formed, the distal-end hanging hole 520 may extend outwards from the water bottle 300, and the distal-end hanging hole 520 and the water bottle 300 may be integrally formed. The arrangement of the integrally formed structure makes the connection between the water bottle 300 and the filter 100 more stable and firmer.

In other embodiments, the distal-end snapping portion and the distal-end fitting portion may be of other structures in snapped connection.

Preferably, the proximal end 310 of the water bottle 300 is also detachably connected with the filter 100 by a proximal-end snapping assembly 600. During snapped connection of the distal-end snapping assembly 500, the proximal-end snapping assembly 600 realizes snapped connection. When the water-bottle water inlet assembly 500 is released in the axial direction of the rotation axis, the proximal-end snapping assembly 600 is released from the snapped connection. The proximal-end snapping assembly 600 is provided at the proximal end 310 of the water bottle 300, thereby further strengthening the connection at the proximal end 310 of the water bottle 300. Furthermore, the proximal-end snapping assembly 600 can also be fitted with the water-bottle water inlet assembly 400 and the distal-end snapping assembly 500 to realize synchronous connection or detachment. Specifically, the proximal-end snapping assembly 600 also includes a proximal-end snapping portion 610 and a proximal-end fitting portion 620 which can be snapped to or separated from the proximal-end snapping portion 610, and in the embodiment of the present invention, the proximal-end snapping portion is configured as a proximal-end hanging buckle 610, and the proximal-end fitting portion is configured as a proximal-end hanging hole 620.

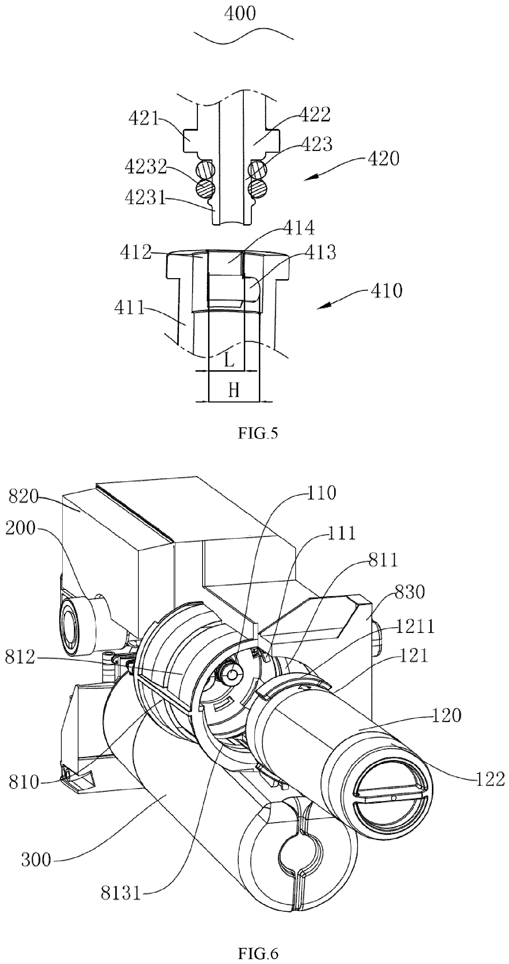

In the embodiment of the present invention, the water bottle 300 and the water valve 200 are also selectively communicated by the water-bottle water inlet assembly 400, and the water-bottle water inlet assembly 400 includes: a water inlet sleeve 410 and a water inlet insertion part 420 rotatably inserted into the water inlet sleeve 410. The water inlet insertion part 420 and the water inlet sleeve 410 are provided therein with water inlet flow channels which can be communicated with each other. The water inlet sleeve 410 is provided on one of the water bottle 300 and the water valve 200, and the water inlet insertion part 420 is provided on the other of the water bottle 300 and the water valve 200. The water inlet insertion part 420 is provided with a water inlet limiting protrusion 421, and the water inlet sleeve 410 includes a water inlet cylinder 411, a water inlet insertion port 412 formed on the water inlet cylinder 411 and a water inlet limiting hole 413 provided in a circumferential direction of the water inlet cylinder 411. The water inlet sleeve 410 is further provided with a water inlet guide groove 414 matched with the water inlet limiting protrusion 421, and the water inlet guide groove 414 extends axially from the water inlet insertion port 412 along the water inlet sleeve 410 and is communicated with an end portion of the water inlet limiting hole 413. As shown in FIG. 5, in the circumferential direction of the water inlet cylinder 411, a dimension H of the water inlet limiting hole 413 is greater than a dimension L of the water inlet guide groove 414. That is, the water-bottle water inlet assembly 400 not only serves to connect the water bottle 300 and the water valve 200, but also serves to allow water to pass therethrough, that is, allow water in the water valve 200 to flow into the water bottle 300, after the connection. In the embodiment of the present invention, external water firstly flows into the filter 100, and then flows into the water valve 200 from the filter 100, the water valve 200 has two water outlets, one of the two water outlets extends outwards to form the water inlet insertion part 420, and an inlet of the water bottle 300 extends outwards to form the water inlet sleeve 410, such that the water can flow through the water inlet insertion part 420 and the water inlet sleeve 410 after the water inlet insertion part 420 and the water inlet sleeve 410 are connected.

In addition, in the circumferential direction of the water inlet cylinder 411, the dimension H of the water inlet limiting hole 413 is set to be greater than the dimension L of the water inlet guide groove 414, such that when the water inlet insertion part 420 is inserted into the water inlet sleeve 410, the water inlet limiting protrusion 421 on the water inlet insertion part 420 can enter the water inlet guide groove 414 from the water inlet insertion port 412 on the water inlet sleeve 410, and then, the water bottle 300 is rotated along the rotation axis in a first direction, and the water inlet limiting protrusion 421 can enter the water inlet limiting hole 413; since the dimension H of the water inlet limiting hole 413 is larger and the water inlet limiting hole 413 is not communicated with the water inlet insertion port 412, at this point, the water inlet limiting protrusion 421 and the water inlet limiting hole 413 are in snap fit, such that even when a force is applied in a direction opposite to an insertion direction, the water inlet insertion part 420 cannot reversely exit from the water inlet sleeve 410, thereby locking the water-bottle water inlet assembly 400. Then, the water bottle 300 is rotated along the rotation axis in a direction opposite to the first direction, such that the water inlet limiting protrusion 421 is aligned with the water inlet guide groove 414, thereby releasing the water-bottle water inlet assembly 400 in the axial direction of the rotation axis. At this point, the water inlet limiting protrusion 421 can move towards the water inlet insertion port 412 along the water inlet guide groove 414 by applying a force in the direction opposite to the insertion direction, and finally, the water inlet insertion part 420 reversely exits from the water inlet sleeve 410.

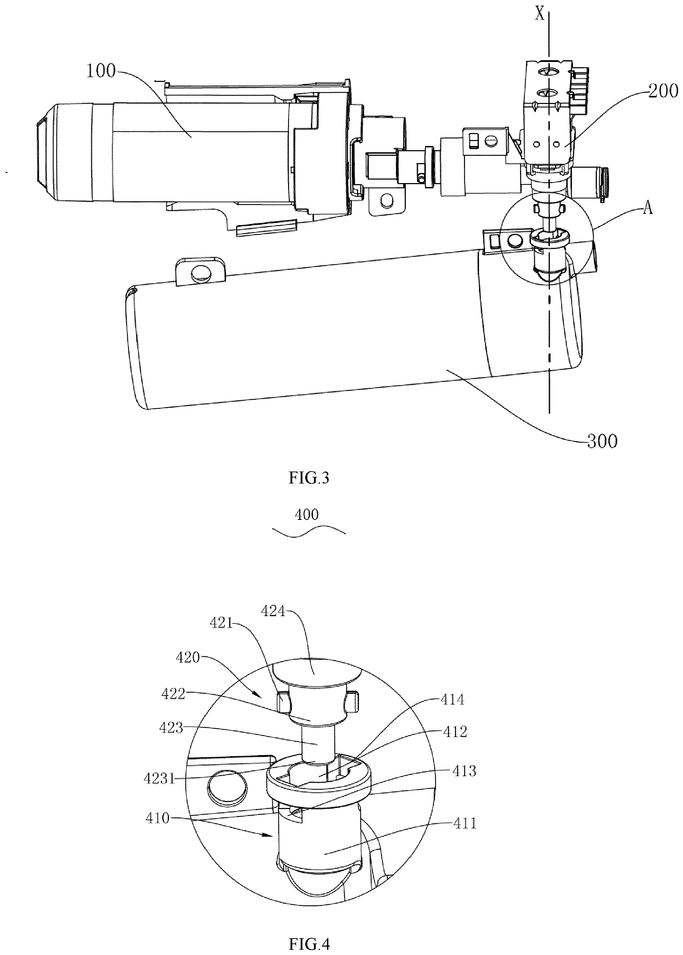

Specifically, as shown in FIG. 3, the rotation axis is configured as a central axis X of the water inlet sleeve 410. That is, by rotating the water bottle 300 about the central axis X of the water inlet sleeve 410, the water-bottle water inlet assembly 400 can be locked or released, and the distal-end snapping assembly 500 can realize snapped connection or be released from the snapped connection. Thus, the connection and detachment of the water bottle 300 are simple, and an operation of a user is convenient.

Further, the water inlet sleeve 410 extends outwards from a water inlet of the water bottle 300, and the water inlet sleeve 410 and the water bottle 300 are integrally formed. The water inlet insertion part 420 extends outwards from a water outlet of the water valve 200, and the water inlet insertion part 420 and the water valve 200 are integrally formed. That is, no water pipe is provided between the water bottle 300 and the water valve 200, and the water bottle 300 and the water valve 200 are directly connected through the water-bottle water inlet assembly 400 extending from the respective components of the water bottle 300 and the water valve 200, such that the connection is more stable, and a problem that the water pipe is bent to be damaged and difficult to repair, and a risk of water leakage are avoided.

Preferably, the water inlet insertion part 420 includes a first insertion portion 422 and a second insertion portion 423 provided at a front end of the first insertion portion 422, and an outer diameter of the second insertion portion 423 is less than an outer diameter of the first insertion portion 422. When the water inlet insertion part 420 is inserted into the water inlet sleeve 410, the second insertion portion 423 having a less inner diameter is inserted into the water inlet sleeve 410 first, such that a guiding function can be provided for an insertion action, and the connection of the water-bottle water inlet assembly 400 is easier.

In the embodiment of the present invention, the second insertion portion 423 is sleeved with a sealing part The sealing part 4231 is configured to fill a gap between an outer wall of the second insertion portion 423 and an inner wall of the water inlet sleeve 410, thereby preventing water leakage. Specifically, an inner diameter at a position of the water inlet sleeve 410 corresponding to the sealing part 4231 on the second insertion portion 423 is reduced, such that the sealing part 4231 is pressed between the inner wall of the water inlet sleeve 410 and the second insertion portion 423 to further enhance a sealing effect.

Further, the water inlet insertion part 420 further includes a stopper 424 connected with the first insertion portion 421, and an end surface of the stopper 424 abuts against an end surface of the water inlet sleeve 410. The stopper 424 serves as a terminal point of insertion of the water inlet insertion part 420 into the water inlet sleeve 410; that is, when the water inlet insertion part is inserted into the water inlet sleeve 410, and the end surface of the stopper 424 is seen to abut against the end surface of the water inlet sleeve 410, the insertion action can be determined to be in place.

As shown in FIG. 4, the water inlet insertion part 420 is provided with two water inlet limiting protrusions 421, the two water inlet limiting protrusions 421 are symmetrically arranged relative to an axis of the water inlet insertion part 420, and two water inlet guide grooves 413 are arranged at positions on the water inlet sleeve corresponding to the two water inlet limiting protrusions 421. The two symmetrical water inlet limiting protrusions 421 and the two corresponding water inlet guide grooves 413 are arranged, such that the water inlet insertion part 420 and the water inlet sleeve 410 can be locked more firmly and stably.

Preferably, the filter 100 and the water valve 200 are selectively communicated through a filter water outlet assembly 700. The filter water outlet assembly 700 includes: a water outlet sleeve 710 and a water outlet insertion part 720 rotatably inserted into the water outlet sleeve 710. The filter water outlet assembly 700, the water outlet sleeve 710 and the water outlet insertion part 720 have identical structures to and different positions from the water-bottle water inlet assembly 400, the water inlet sleeve 410 and the water inlet insertion part 420. Therefore, the detailed structure of the filter water outlet assembly 700 is not repeated.

Further, the filter 100, the water valve 200 and the water bottle 300 are adjacently arranged two by two, and the water-bottle water inlet assembly 400 is perpendicular to the filter water outlet assembly 700. That is, the central axis X of the water outlet sleeve 710 is perpendicular to the central axis of the water inlet sleeve 410.

As shown in FIG. 1, the water-circuit integrated device further includes a housing 800, and the housing 800 encloses the filter 100 and the water valve 200. Specifically, the housing 800 also functions to connect the water-circuit integrated device to the refrigerator. In addition, the distal-end hanging buckle 510 is also provided on the housing 800, such that the connection of the water bottle 300 is more stable.

As shown in FIG. 6, the integrated bracket 800 includes a filter housing 810, a water valve housing 820 and a fixing portion 830 connected with each other, the filter housing 810 accommodates the filter 100, the water valve housing 820 accommodates the water valve 200, and the water bottle 300 is connected with the fixing portion 830. The filter housing 810 has an opening 811, the filter 100 includes a connector 110 and a filter cartridge 120 rotatably connected with the connector 110, the filter cartridge 120 is inserted into the filter housing 810 through the opening 811, and the connector 110 is provided at an end in the filter housing 810 apart from the opening 811. The filter cartridge 120 includes a first end 121 close to the connector 110 and a second end 122 provided opposite to the first end 121, a clamping part 1211 is provided on a circumference of the first end 121, and a buckling part 111 fitted with the clamping part 1211 is provided on the connector 110. When the filter cartridge 120 is located at a butted position of the filter cartridge 120 and the connector 110, the clamping part 1211 and the buckling part 111 are provided back and forth in an axial direction and adjacent in a circumferential direction. When the filter cartridge 120 is located at a mounting finished position, the clamping part 1211 and the buckling part 111 are provided front and back in the axial direction and staggered in the circumferential direction.

In the embodiment of the present invention, the butted position is configured as a position where the filter cartridge 120 is inserted into the filter housing 810 until the filter cartridge cannot be inserted further, and at this point, the filter cartridge 120 and the connector 110 are in butt connection and in an unlocked state in the axial direction; that is, the filter cartridge 120 can be drawn out of the filter housing 810 at any time. The mounting finished position is configured as a position where the filter cartridge 120 and the connector 110 are locked under an action of the clamping part 1211 and the buckling part 111 in the axial direction, and at this point, the filter cartridge 120 cannot be drawn out of the filter housing 810.

In the water-circuit integrated device according to the present invention, the clamping part 1211 is provided on the filter cartridge 120, the buckling part 111 is provided on the connector 110, and when the filter cartridge 120 is inserted into the filter housing 810 and in butt connection with the connector 110, the clamping part 1211 and the buckling part 111 are provided front and back in the axial direction and adjacent in the circumferential direction. At this point, the clamping part 1211 and the buckling part 111 can be staggered in the circumferential direction only by rotating the filter cartridge 120, such that the clamping part 1211 is in snapped connection with the buckling part 111, the filter cartridge 120 may be located at the mounting finished position, and therefore, a mounting of the filter cartridge 120 is easy; the filter cartridge 120 can be detached only by reverse rotation, thus facilitating an operation of a user.

Further, the filter housing 810 includes a first circular arc section 812 and a second circular arc section 813 which enclose a cylinder. The first circular arc section 812 can be matched with the insertion of the filter cartridge 120 into the filter housing 810, and the second circular arc section 813 can interfere with the insertion of the filter cartridge 120 into the filter housing 810. Specifically, the filter cartridge 120 is generally cylindrical, and a filter medium is provided inside the filter cartridge. When mounting the filter cartridge 120, the user may rotate the filter cartridge 120 at will, but since each of the connector 110 and the filter cartridge 120 is provided with water inlet and outlet terminals, the terminals can be in butt connection at predefined angles, the connector 110 and the filter cartridge 120 are required to be rotated for snapped connection after the butt connection, and the connector 110 is provided inside the filter housing 810, butted and connected parts of the filter cartridge 120 and the connector 110 cannot be seen after the filter cartridge 120 is inserted into the filter housing 810, and therefore, after the filter cartridge 120 is inserted, there may exist problems that the water inlet and outlet terminals of the filter cartridge 120 and the connector 110 cannot be in butt connection, and the filter cartridge 120 cannot be in correct snapped connection with the connector 110 even after rotated a plurality of times. Therefore, when the filter housing 810 is divided into the first circular arc section 812 and the second circular arc section 813, and the clamping part 1211 on the filter cartridge 120 is aligned with the first circular arc section 812, the filter cartridge 120 can be inserted into the filter housing 810, and when the filter cartridge 120 rotates and the clamping part 1211 is aligned with the second circular arc section 813, the second circular arc section 813 interferes with the filter cartridge 120, such that a rotation angle of the filter cartridge 120 can be limited, and the filter cartridge 120 can be inserted into the filter housing 810 at a predetermined angle, so as to be in smooth butt connection with the connector 110, and can be smoothly rotated and then be in snapped connection with the connector 110.

In the embodiment of the present invention, the first circular arc section 812 has an arc length equal to a circumferential dimension of the clamping part 1211. Thus, when the clamping part 1211 is aligned with the first circular arc section 812, the filter cartridge 120 can be inserted into the filter housing 810. The arc length of the first circular arc section 812 is matched with the dimension of the clamping part 1211, such that a prompt is provided for the user, and the user can insert the filter cartridge 120 into the filter housing 810 by aligning the first circular arc section and the clamping part, thus facilitating mounting of the filter cartridge 120.

Preferably, a support portion 8131 is provided on the second circular arc section 813, the support portion 8131 protrudes towards an interior of the filter housing 810, and when the filter cartridge 120 is inserted into the filter housing 810, the support portion 8131 abuts against the filter cartridge 120. The support portion 8131 is provided to support the filter cartridge 120 after the filter cartridge is connected with the connector 110, such that the filter cartridge is not suspended, and the filter cartridge 120 is more stable after mounted.

In the embodiment of the present invention, the filter housing 810, the water valve housing 820 and the fixing portion 830 are integrally formed. The integrally formed integrated bracket has a more stable structure, and when the water-circuit integrated device is assembled, the filter 100, the water valve 200 and the water bottle 300 are connected with the integrated bracket 800, such that a connection mode is simple.

Preferably, the filter 100, the water valve 200 and the water bottle 300 are adjacent to each other, and the filter 100 and the water bottle 300 are provided at an angle. Since bubbles may be generated in the water bottle 300, and have different sizes, a burst may corrode or damage metal components of the water bottle 300, and a water hammer effect may be generated. In the embodiment of the present invention, the water bottle 300 and the filter 100 are arranged at an angle of 5 degrees, thus ensuring that the bubbles in the water bottle 300 flow out of a water storage space in the water bottle 300, reducing the water hammer effect, and reducing a probability of corrosion or damage to the water bottle 300.

In the embodiment of the present invention, the filter 100, the water valve 200, and the water bottle 300 are adjacent to each other, and the filter 100 and the water bottle 300 are provided in parallel. By arranging the filter 100 and the water bottle 300 in parallel, an overall dimension of the water-circuit integrated device may be more compact, and more spaces are saved.

An embodiment of the present invention further discloses a refrigerator including a refrigerating chamber, wherein the water-circuit integrated device is mounted in the refrigerating chamber.

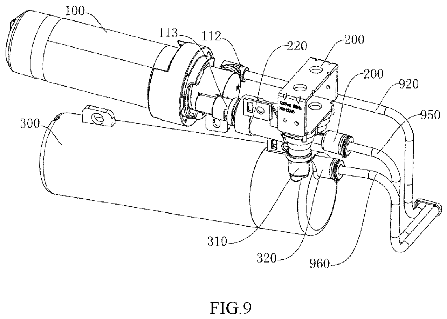

Specifically, as shown in FIG. 9, the refrigerator includes a dispenser and an ice maker, the ice maker is connected with an ice maker water supply pipe 950, the dispenser is connected with a dispenser water supply pipe 960, the connector 110 is provided with a filter water inlet 112 and a filter water outlet 113, the water bottle 300 includes a water bottle water inlet 141 and a water bottle water outlet 142, and the water valve 200 includes a water valve water inlet 210, a first water outlet 220, and a second water outlet 230. The filter water inlet 112 is connected with a water inlet pipe 920 for supplying water, the filter water outlet 113 is connected with the water valve water inlet 210, and the water valve selectively supplies water to the first water outlet 220 or the second water outlet 230.

The first water outlet 220 is connected with the ice maker water supply pipe 950, the second water outlet 230 is connected with the water bottle water inlet 141, and the water bottle water outlet 142 is connected with the dispenser water supply pipe 960. Therefore, the external water can be supplied to the ice maker and the distributor through the water-circuit integrated device.

In the water-circuit integrated device according to the present invention, the clamping part is provided on the filter cartridge, the buckling part is provided on the connector, and when the filter cartridge is inserted into the filter housing and in butt connection with the connector, the clamping part and the buckling part are provided front and back in the axial direction and adjacent in the circumferential direction. At this point, the clamping part and the buckling part can be staggered in the circumferential direction only by rotating the filter cartridge, such that the clamping part is in snapped connection with the buckling part, the filter cartridge may be located at the mounting finished position, and therefore, the mounting of the filter cartridge is easy; the filter cartridge can be detached only by reverse rotation, thus facilitating the operation of the user. The filter housing is divided into the first circular arc section and the second circular arc section, such that the rotation angle of the filter cartridge can be limited, and the filter cartridge can be inserted into the filter housing at the predetermined angle, so as to be in smooth butt connection with the connector, and can be smoothly rotated and then be in snapped connection with the connector. The arc length of the first circular arc section is set to be matched with the dimension of the clamping part, such that a prompt is provided for the user, and the user can insert the filter cartridge into the filter housing by aligning the first circular arc section and the clamping part, thus facilitating mounting of the filter cartridge. The support portion is provided to support the filter cartridge after the filter cartridge is connected with the connector, such that the filter cartridge is not suspended, and the filter cartridge is more stable after mounted.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments may be combined properly to form other embodiments which may be understood by those skilled in the art.

A series of the detailed descriptions set forth above is merely specific description of feasible embodiments of the present invention, and is not intended to limit the protection scope of the present invention. Equivalent embodiments or modifications made within the spirit of the present invention shall fall within the protection scope of the present invention.

## Claims

1. A water-circuit integrated device, comprising a filter and a filter housing with an opening, wherein the filter comprises a connector and a filter cartridge rotatably connected to the connector, the filter cartridge is inserted into the filter housing through the opening, and the connector is provided at an end in the filter housing apart from the opening; the filter cartridge comprises a first end close to the connector and a second end provided opposite to the first end, a clamping part is provided on a circumference of the first end, and a buckling part fitted with the clamping part is provided on the connector; when the filter cartridge is located at a butted position of the filter cartridge and the connector, the clamping part and the buckling part are provided front and back in an axial direction and adjacent in a circumferential direction; when the filter cartridge is located at a mounting finished position, the clamping part and the buckling part are provided front and back in the axial direction and staggered in the circumferential direction.

2. The water-circuit integrated device according to claim 1, wherein the filter housing comprises a first circular arc section and a second circular arc section which enclose a cylinder; the first circular arc section can be matched with the insertion of the filter cartridge into the filter housing, and the second circular arc section can interfere with the insertion of the filter cartridge into the filter housing.

3. The water-circuit integrated device according to claim 2, wherein the first circular arc section has an arc length equal to a circumferential dimension of the clamping part.

4. The water-circuit integrated device according to claim 2, wherein a support portion is provided on the second circular arc section, the support portion protrudes towards an interior of the filter housing, and when the filter cartridge is inserted into the filter housing, the support portion abuts against the filter cartridge.

5. The water-circuit integrated device according to claim 1, further comprising a water valve and a water bottle sequentially communicated with the filter, and a water valve housing and a fixing portion connected with the filter housing, wherein the water valve housing accommodates the water valve, and the water bottle is connected to the fixing portion.

6. The water-circuit integrated device according to claim 5, wherein the filter housing, the water valve housing, and the fixing portion are integrally formed.

7. The water-circuit integrated device according to claim 5, wherein the water valve is selectively communicated with the water bottle through a water-bottle water inlet assembly; the water-bottle water inlet assembly comprises a water inlet sleeve and a water inlet insertion part rotatably inserted into the water inlet sleeve, and water inlet flow channels which can be mutually communicated are provided in the water inlet insertion part and the water inlet sleeve.

8. The water-circuit integrated device according to claim 7, wherein the water inlet sleeve extends outwards from a water inlet of the water bottle, and the water inlet sleeve and the water bottle are integrally formed; the water inlet insertion part extends outwards from a water outlet of the water valve, and the water inlet insertion part and the water valve are integrally formed.

9. A refrigerator, comprising a refrigerating chamber, wherein the water-circuit integrated device according to any one of claims 1 to 8 is mounted in the refrigerating chamber.

10. The refrigerator according to claim 9, comprising a dispenser and an ice maker, the ice maker being connected with an ice maker water supply pipe, and the dispenser being connected with a dispenser water supply pipe,
wherein the water-circuit integrated device further comprises a water valve and a water bottle, the connector is provided with a filter water inlet and a filter water outlet, the water bottle comprises a water bottle water inlet and a water bottle water outlet, and the water valve comprises a water valve water inlet, a first water outlet and a second water outlet;
the filter water inlet is connected with a water inlet pipe for supplying water, the filter water outlet is connected with the water valve water inlet, and the water valve selectively supplies water to the first water outlet or the second water outlet;
the first water outlet is connected with the ice maker water supply pipe, the second water outlet is connected with the water bottle water inlet, and the water bottle water outlet is connected with the dispenser water supply pipe.
